# EUROPEAN PATENT APPLICATION

(11) **EP 4 701 244 A1**
(43) Date of publication of application: **25.02.2026**
(21) Application number: 24854290.4
(22) Date of filing: 20.06.2024
(51) Int. Cl.: H04W 4/80, H04W 56/00, H04W 4/06, H04M 1/72412, H04W 76/15, H04W 76/23, H04W 76/25, H04W 76/40

(54) **ELECTRONIC DEVICE, METHOD, AND NON-TRANSITORY COMPUTER-READABLE STORAGE MEDIUM FOR HANDOVER OF AUDIO SERVICE**

(30) Priority: 17.08.2023 KR 20230107696; 01.09.2023 KR 20230116551
(71) Applicant: Samsung Electronics Co., Ltd., Suwon-si, Gyeonggi-do 16677 (KR)
(72) Inventor: JANG, Wonkyoung, Suwon-si Gyeonggi-do 16677 (KR); KIM, Sunjo, Suwon-si Gyeonggi-do 16677 (KR); KIM, Seongbok, Suwon-si Gyeonggi-do 16677 (KR); KIM, Seongji, Suwon-si Gyeonggi-do 16677 (KR); KIM, Taekyung, Suwon-si Gyeonggi-do 16677 (KR); AHN, Byeonghoon, Suwon-si Gyeonggi-do 16677 (KR); JANG, Junho, Suwon-si Gyeonggi-do 16677 (KR); JU, Yunmi, Suwon-si Gyeonggi-do 16677 (KR)
(74) Representative: Gulde & Partner
(86) International application number: PCT/KR2024/008520
(87) International publication number: WO 2025/037737

(57) **Abstract**

The present invention relates to an electronic device for handover of an audio service. The electronic device is characterized by: providing a first audio service on the basis of synchronization with a broadcast isochronous stream (BIS) from a second external electronic device; while the first audio service is provided, receiving a request to stop the synchronization with the BIS and maintain synchronization with a periodic advertisement; and while providing a second audio service on the basis of data received from a first external electronic device, stopping the synchronization with the BIS and maintaining the synchronization with the periodic advertisement on the basis of the request.

## Description

### [Technical Field]

The following descriptions relate to an electronic device, a method, and a non-transitory computer-readable storage medium for handover of an audio service.

### [Background Art]

Compared to legacy Bluetooth^{®} (or classic Bluetooth), Bluetooth^{®} low energy (BLE) may provide reduced power consumption and provide at least a similar or often greater communication range between connected devices. BLE may be provided on an industrial, scientific, and medical (ISM) radio band.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may comprise communication circuitry for Bluetooth low energy (BLE). The electronic device may comprise a speaker. The electronic device may comprise at least one processor. The at least one processor may be configured to, based on synchronizing, in accordance with synchronizing to a periodic advertisement of a second external electronic device indicated by information from a first external electronic device, to a broadcast isochronous stream (BIS) from the second external electronic device, provide a first audio service outputting audio via the speaker. The at least one processor may be configured to, while the first audio service is provided, receive, via a communication link between the electronic device and the first external electronic device, from the first external electronic device, a request that ceases the synchronizing to the BIS and maintains the synchronizing to the periodic advertisement, using the communication circuitry. The at least one processor may be configured to, while providing a second audio service based on data received via the communication link from the first external electronic device, cease the synchronizing to the BIS and maintain the synchronizing to the periodic advertisement.

An electronic device is provided. The electronic device may comprise communication circuitry for Bluetooth low energy (BLE). The electronic device may comprise a speaker. The electronic device may comprise at least one processor. The at least one processor may be configured to, based on synchronizing, in accordance with synchronizing to a periodic advertisement of a second external electronic device indicated by information from a first external electronic device, to a broadcast isochronous stream (BIS) from the second external electronic device, provide a first audio service outputting audio via the speaker. The at least one processor may be configured to, while the first audio service is provided, receive, via a communication link between the electronic device and the first external electronic device, from the first external electronic device, a signal for starting a second audio service, using the communication circuitry. The at least one processor may be configured to, in response to the signal, cease providing the first audio service based on data for the BIS broadcasted from the second external electronic device. The at least one processor may be configured to, based on the signal, maintain the synchronizing to the periodic advertisement, while ceasing providing the first audio service and providing the second audio service based on data received via the communication link from the first external electronic device.

An electronic device is provided. The electronic device may comprise communication circuitry for Bluetooth low energy (BLE). The electronic device may comprise at least one processor. The at least one processor may be configured to transmit, to another electronic device via a communication link between the electronic device and the other electronic device, first information on a periodic advertisement of an external electronic device, using the communication circuitry. The at least one processor may be configured to receive, via the communication link, from the other electronic device, second information indicating a state of the other electronic device synchronized to a broadcast isochronous stream (BIS) from the external electronic device in accordance with the first information, using the communication circuitry. The at least one processor may be configured to, after the second information is received, detect an event for starting an audio service provided via the communication link, in conjunction with the other electronic device. The at least one processor may be configured to, in response to the event, transmit, to the other electronic device via the communication link, a request that ceases the synchronizing to the BIS and maintains the synchronizing of the periodic advertisement, using the communication circuitry.

A method is provided. The method may be executed in an electronic device with communication circuitry for Bluetooth low energy (BLE) and a speaker. The method may comprise, based on synchronizing, in accordance with synchronizing to a periodic advertisement of a second external electronic device indicated by information from a first external electronic device, to a broadcast isochronous stream (BIS) from the second external electronic device, providing a first audio service outputting audio via the speaker. The method may comprise, while the first audio service is provided, receiving, via a communication link between the electronic device and the first external electronic device, from the first external electronic device, a request that ceases the synchronizing to the BIS and maintains the synchronizing to the periodic advertisement, using the communication circuitry. The method may comprise, while providing a second audio service based on data received via the communication link from the first external electronic device, ceasing the synchronizing to the BIS and maintaining the synchronizing to the periodic advertisement.

A method is provided. The method may be executed in an electronic device with communication circuitry for Bluetooth low energy (BLE) and a speaker. The method may comprise, based on synchronizing, in accordance with synchronizing to a periodic advertisement of a second external electronic device indicated by information from a first external electronic device, to a broadcast isochronous stream (BIS) from the second external electronic device, providing a first audio service outputting audio via the speaker. The method may comprise, while the first audio service is provided, receiving, via a communication link between the electronic device and the first external electronic device, from the first external electronic device, a signal for starting a second audio service, using the communication circuitry. The method may comprise, in response to the signal, ceasing providing the first audio service based on data for the BIS broadcasted from the second external electronic device. The method may comprise, based on the signal, maintaining the synchronizing to the periodic advertisement, while ceasing providing the first audio service and providing the second audio service based on data received via the communication link from the first external electronic device.

A method is provided. The method may be executed in an electronic device with communication circuitry for Bluetooth low energy (BLE). The method may comprise transmitting, to another electronic device via a communication link between the electronic device and the other electronic device, first information on a periodic advertisement of an external electronic device, using the communication circuitry. The method may comprise receiving, via the communication link, from the other electronic device, second information indicating a state of the other electronic device synchronized to a broadcast isochronous stream (BIS) from the external electronic device in accordance with the first information, using the communication circuitry. The method may comprise, after the second information is received, detecting, an event for starting an audio service provided via the communication link, in conjunction with the other electronic device. The method may comprise, in response to the event, transmitting, to the other electronic device via the communication link, a request that ceases the synchronizing to the BIS and maintains the synchronizing of the periodic advertisement, using the communication circuitry.

A non-transitory computer-readable storage medium is provided. The non-transitory computer-readable storage medium may store one or more programs. The one or more programs may comprise instructions which, when executed by an electronic device with communication circuitry for Bluetooth low energy (BLE) and a speaker, cause the electronic device to, based on synchronizing, in accordance with synchronizing to a periodic advertisement of a second external electronic device indicated by information from a first external electronic device, to a broadcast isochronous stream (BIS) from the second external electronic device, provide a first audio service outputting audio via the speaker. The one or more programs may comprise instructions which, when executed by the electronic device, cause the electronic device to, while the first audio service is provided, receive, via a communication link between the electronic device and the first external electronic device, from the first external electronic device, a request that ceases the synchronizing to the BIS and maintains the synchronizing to the periodic advertisement, using the communication circuitry. The one or more programs may comprise instructions which, when executed by the electronic device, cause the electronic device to, while providing a second audio service based on data received via the communication link from the first external electronic device, cease the synchronizing to the BIS and maintain the synchronizing to the periodic advertisement.

A non-transitory computer-readable storage medium is provided. The non-transitory computer-readable storage medium may store one or more programs. The one or more programs may comprise instructions which, when executed by an electronic device with communication circuitry for Bluetooth low energy (BLE) and a speaker, cause the electronic device to, based on synchronizing, in accordance with synchronizing to a periodic advertisement of a second external electronic device indicated by information from a first external electronic device, to a broadcast isochronous stream (BIS) from the second external electronic device, provide a first audio service outputting audio via the speaker. The one or more programs may comprise instructions which, when executed by the electronic device, cause the electronic device to, while the first audio service is provided, receive, via a communication link between the electronic device and the first external electronic device, from the first external electronic device, a signal for starting a second audio service, using the communication circuitry. The one or more programs may comprise instructions which, when executed by the electronic device, cause the electronic device to, in response to the signal, cease providing the first audio service based on data for the BIS broadcasted from the second external electronic device. The one or more programs may comprise instructions which, when executed by the electronic device, cause the electronic device to, based on the signal, maintain the synchronizing to the periodic advertisement, while ceasing providing the first audio service and providing the second audio service based on data received via the communication link from the first external electronic device.

A non-transitory computer-readable storage medium is provided. The non-transitory computer-readable storage medium may store one or more programs. The one or more programs may comprise instructions which, when executed by an electronic device with communication circuitry for Bluetooth low energy (BLE), cause the electronic device to transmit, to another electronic device via a communication link between the electronic device and the other electronic device, first information on a periodic advertisement of an external electronic device, using the communication circuitry. The one or more programs may comprise instructions which, when executed by the electronic device, cause the electronic device to, receive, via the communication link, from the other electronic device, second information indicating a state of the other electronic device synchronized to a broadcast isochronous stream (BIS) from the external electronic device in accordance with the first information, using the communication circuitry. The one or more programs may comprise instructions which, when executed by the electronic device, cause the electronic device to, after the second information is received, detect, an event for starting an audio service provided via the communication link, in conjunction with the other electronic device. The one or more programs may comprise instructions which, when executed by the electronic device, cause the electronic device to, in response to the event, transmit, to the other electronic device via the communication link, a request that ceases the synchronizing to the BIS and maintains the synchronizing of the periodic advertisement, using the communication circuitry.

### [Description of the Drawings]

FIG. 1 illustrates an example of an environment including an electronic device, a first external electronic device, and a second external electronic device.
FIG. 2 is a simplified block diagram of an exemplary first external electronic device.
FIG. 3 is a simplified block diagram of an exemplary electronic device.
FIG. 4 illustrates an exemplary method of maintaining a periodic advertisement based on a request caused in accordance with a first handover of an audio service.
FIG. 5 illustrates an exemplary method of executing in an electronic device in accordance with synchronizing to a broadcast isochronous stream (BIS).
FIG. 6 illustrates an exemplary method executed in a first external electronic device in accordance with detection of an event.
FIGS. 7 and 8 illustrate an exemplary method executed in an electronic device in accordance with reception of a request.
FIG. 9 illustrates an exemplary method of resuming synchronizing to a BIS based on another request caused for a second handover of an audio service.
FIG. 10 illustrates an exemplary method executed in a first external electronic device in accordance with detection of another event.
FIG. 11 illustrates an exemplary method of maintaining a periodic advertisement based on a signal caused for a first handover of an audio service.
FIG. 12 illustrates an exemplary method of resuming synchronizing to a BIS based on another signal caused for a second handover of an audio service.
FIG. 13 is a block diagram of an electronic device in a network environment according to various embodiments.

### [Mode for Invention]

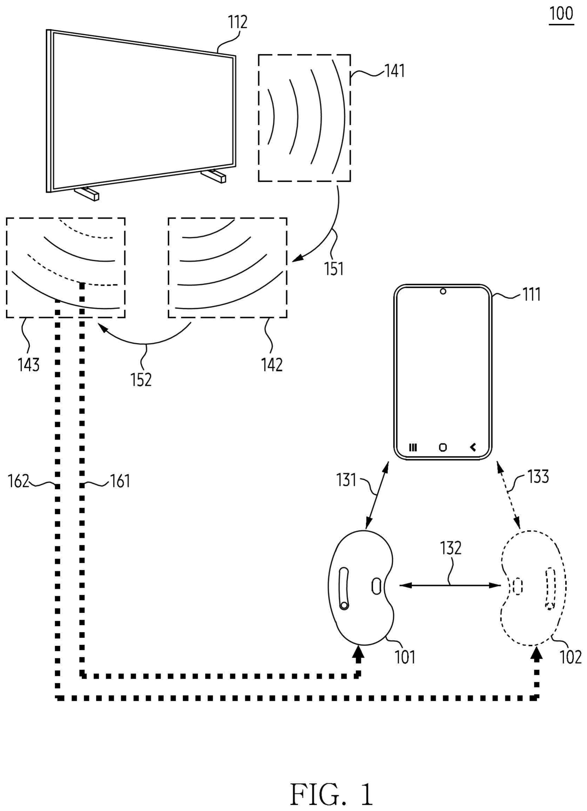

FIG. 1 illustrates an example of an environment including an electronic device, a first external electronic device, and a second external electronic device.

Referring to FIG. 1, an environment 100 may include an electronic device 101, a first external electronic device 111, and a second external electronic device 112.

The electronic device 101 in the environment 100 may provide an audio service in conjunction with the first external electronic device 111. As a non-limiting example, the electronic device 101 may be a sink device, and the first external electronic device 111 may be a source device. As a non-limiting example, the electronic device 101 may be a source device.

For example, the electronic device 101 may be configured to output audio. For example, the electronic device 101 may output audio based on data received from the first external electronic device 111 via a communication link 131 between the electronic device 101 and the first external electronic device 111. For example, the communication link 131 may include an asynchronous connectionless link (ACL), which is a control data link. As a non-limiting example, the communication link 131 may be used for a connected isochronous stream (CIS).

For example, the electronic device 101 may be configured to obtain audio. For example, the electronic device 101 may obtain audio, based on a request received from the first external electronic device 111 via the communication link 131. For example, the electronic device 101 may transmit, to the first external electronic device 111 via the communication link 131, information on the obtained audio, based on data received from the first external electronic device 111 via the communication link 131.

The electronic device 101 may provide an audio service based on data broadcasted from the second external electronic device 112. As a non-limiting example, the electronic device 101 may be a sink device and the second external electronic device 112 may be a source device.

For example, the electronic device 101 may output audio, based on data for a broadcast isochronous stream (BIS) from the second external electronic device 112. For example, the audio may be broadcasted via a broadcast isochronous group (BIG). For example, the BIG may include multiple instances for the BIS. For example, an event of the BIG may include one or more BIS events. For example, each of the one or more BIS events may include one or more sub-events. For example, the audio may be outputted based on synchronizing to the BIS from the second external electronic device 112, as indicated by arrow 161. For example, the synchronizing to the BIS may indicate receiving the data for the BIS. For example, the synchronizing to the BIS may be executed based on synchronizing to a periodic advertisement 142 of the second external electronic device 112.

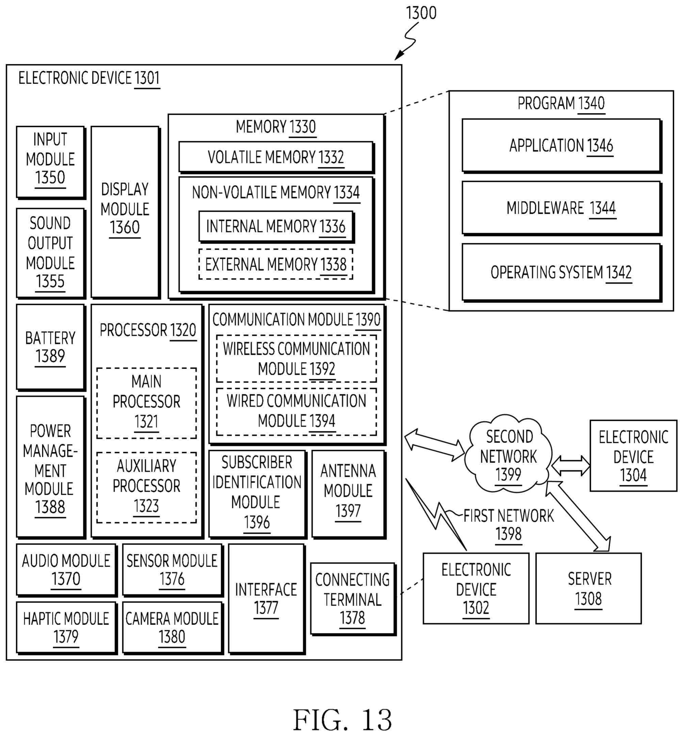

The first external electronic device 111 within the environment 100 may be used to assist the electronic device 101 in synchronizing to the BIS. For example, the first external electronic device 111 may include at least a portion of the electronic device 1301 of FIG. 13, or may correspond to at least a portion of the electronic device 1301 of FIG. 13.

As a non-limiting example, unlike the electronic device 101, the first external electronic device 111 may include a display. For example, the first external electronic device 111 may display, on the display, a user interface for checking, identifying, or determining whether to output audio from the electronic device 101 based on data broadcasted from the second external electronic device 112 (e.g., the data for the BIS). For example, the first external electronic device 111 may be used to receive a user input for the user interface. For example, the user input may be used to indicate outputting the audio. For example, the first external electronic device 111 may assist the electronic device 101 in synchronizing to the BIS through operations related to receiving the user input.

As a non-limiting example, the first external electronic device 111 may include a battery having a capacity greater than a capacity of a rechargeable battery within the electronic device 101. For example, in order to reduce power consumption of the rechargeable battery within the electronic device 101, the first external electronic device 111 may perform a scanning for one or more advertisements 141 executed by the second external electronic device 112, instead of the electronic device 101. For example, the one or more of the advertisements 141 may indicate a periodic advertisement 142 executed by the second external electronic device 112, as indicated by arrows 151. For example, at least one packet advertised from the second external electronic device 112 according to the one or more advertisements 141 may include information on the periodic advertisement 142. For example, the periodic advertisement 142 may indicate resources for broadcasting (143) the data for the BIS, as indicated by arrows 152. For example, at least one packet advertised from the second external electronic device 112 according to the periodic advertisement 142 may include information on broadcasting (143) the data for the BIS (e.g., information on resources for broadcasting (143) the data for the BIS). For example, the first external electronic device 111 may assist, through operations related to the scanning, the electronic device 101 in synchronizing to the BIS, as indicated by arrow 161. For example, the first external electronic device 111 may transmit, to the electronic device 101, information indicating a result of the scanning (e.g., information on the periodic advertisement 142). For example, the information may be transmitted to the electronic device 101 via the communication link 131. However, it is not limited thereto. For example, the information may be transmitted from the first external electronic device 111 to the electronic device 101 via a device (e.g., cradle) for storing the electronic device 101 and charging the rechargeable battery of the electronic device 101.

The second external electronic device 112 within the environment 100 may broadcast the data for the BIS. Although not illustrated in FIG. 1, the second external electronic device 112 may execute one or more advertisements 141 to provide information for accessing the data for the BIS. For example, the one or more advertisements 141 may provide information for accessing to the periodic advertisement 142. For example, the second external electronic device 112 may execute the periodic advertisement 142 to provide information for accessing the data for the BIS. For example, the periodic advertisement 142 may provide information for accessing the data for the BIS broadcasted from the second external electronic device 112. For example, the electronic device 101 may synchronize to the BIS by accessing the data for the BIS (or receiving the data for the BIS).

As a non-limiting example, the environment 100 may further include another electronic device 102. For example, the other electronic device 102 may be a device paired with the electronic device 101. As a non-limiting example, the electronic device 101 may be worn on a user's right ear and the other electronic device 102 may be worn on a user's left ear. As a non-limiting example, the electronic device 101 paired with the other electronic device 102 may indicate that the electronic device 101 and the other electronic device 102 are configured as one set to provide an audio service. As a non-limiting example, the electronic device 101 paired with the other electronic device 102 may indicate that the electronic device 101 and the other electronic device 102 are connected via a communication link 132. As a non-limiting example, the electronic device 101 paired with the other electronic device 102 may indicate that the electronic device 101 and the other electronic device 102 are used for stereophonic sound. For example, audio outputted via a speaker of the electronic device 101 may correspond to audio outputted via a speaker of the other electronic device 102. For example, audio obtained via a microphone of the electronic device 101 may correspond to audio obtained via a microphone of the other electronic device 102.

For example, the other electronic device 102 may provide an audio service in conjunction with the first external electronic device 111 and the electronic device 101. As a non-limiting example, the other electronic device 102 may be a sink device. As a non-limiting example, the other electronic device 102 may be a source device.

For example, the other electronic device 102 may be configured to output audio. For example, the other electronic device 102 may output audio based on data received from the first external electronic device 111 via a communication link 133 between the other electronic device 102 and the first external electronic device 111. For example, the communication link 133 may include an ACL, which is a control data link. As a non-limiting example, the communication link 133 may be used for CIS. For example, the other electronic device 102 may output audio based on data received from the first external electronic device 111 via the electronic device 101 (e.g., data received via the communication link 131 and the communication link 132).

For example, the other electronic device 102 may be configured to obtain audio. For example, the other electronic device 102 may obtain audio based on a request received from the first external electronic device 111 via the communication link 133. For example, the other electronic device 102 may obtain audio based on a request received from the first external electronic device 111 via the electronic device 101 (e.g., a request received via the communication link 131 and the communication link 132). For example, the other electronic device 102 may transmit, to the first external electronic device 111 via the communication link 133, information on the obtained audio, based on data received from the first external electronic device 111 via the communication link 133. For example, the other electronic device 102 may transmit, to the first external electronic device 111 via the electronic device 101, information on the obtained audio, based on data received from the first external electronic device 111 via the electronic device 101 (e.g., data received via the communication link 131 and the communication link 132). For example, the information may be transmitted to the first external electronic device 111, via the communication link 131 and the communication link 132.

For example, the other electronic device 102 may provide an audio service, based on data broadcasted from the second external electronic device 112. As a non-limiting example, the other electronic device 102 may be a sink device.

For example, the other electronic device 102 may output audio based on the data for the BIS from the second external electronic device 112. For example, the other electronic device 102 may output, while the electronic device 101 outputs audio via one or more first BIS events within an event of the BIG, audio via one or more second BIS events within the event of the BIG. For example, the audio outputted from the other electronic device 102 may be outputted based on synchronizing to the BIS from the second external electronic device 112, as indicated by arrow 162. For example, synchronizing to the BIS may indicate receiving the data for the BIS. For example, synchronizing to the BIS may be executed based on synchronizing to a periodic advertisement 142 of the second external electronic device 112.

As a non-limiting example, the other electronic device 102 may be configured to execute at least a portion of operations of the electronic device 101 to be exemplified below.

As a non-limiting example, the electronic device 101 may provide a first audio service based on signaling from the second external electronic device 112, and may provide a second audio service based on signaling with the first external electronic device 111. As a non-limiting example, providing simultaneously the first audio service and the second audio service may be limited or disabled within the electronic device 101. For example, in a case that both the first audio service and the second audio service include outputting audio, outputting audio for the first audio service within the electronic device 101 may not be executed simultaneously with outputting audio for the second audio service within the electronic device 101.

For example, a priority of the first audio service may be lower than a priority of the second audio service. As a non-limiting example, the priority of the first audio service and the priority of the second audio service may be set by the first external electronic device 111. As a non-limiting example, the priority of the first audio service and the priority of the second audio service may also be set by the electronic device 101.

As a non-limiting example, the electronic device 101 may detect (or identify) (or recognize) (or check) (or determine) to start providing a second audio service having a higher priority than the priority of the first audio service, while providing the first audio service. For example, the electronic device 101 may execute, based on the detection, a handover (or switching) (or changing) of an audio service provided by using the electronic device 101. For example, the electronic device 101 may execute a first handover from the first audio service to the second audio service, based on the detection. For example, the first audio service may be ceased in accordance with starting of the second audio service (or completing of the first handover).

As a non-limiting example, the electronic device 101 may detect to cease (or terminate) providing the second audio service. For example, the electronic device 101 may execute, based on the detection, a handover of an audio service provided using the electronic device 101 to resume the first audio service. For example, the electronic device 101 may execute, based on the detection, a second handover from the second audio service to the first audio service. For example, the first audio service may be resumed in accordance with terminating of the second audio service (or in accordance with completing of the second handover). For example, the second audio service may be terminated at a first timing, and the first audio service may be resumed from a second timing after the first timing.

For example, as a length of a time interval from the first timing to the second timing increases, the discomfort felt by a user of the electronic device 101 may increase. For example, the length of the time interval may be a parameter indicating performance of the electronic device 101 recognized by the user. For example, reducing the length of the time interval may enhance a quality of an audio service provided using the electronic device 101.

In order to reduce the length of the time interval, an electronic device 101 to be exemplified through descriptions below may maintain synchronizing to the periodic advertisement 142 of the second external electronic device 112 while the second audio service is provided. For example, since operations related to executing new synchronizing to the periodic advertisement 142 to resume the first audio service are skipped by maintaining the synchronizing to the periodic advertisement 142, the electronic device 101 may reduce the length of the time interval. Meanwhile, a first external electronic device 111 to be exemplified through descriptions below may execute an operation to assist in reducing the length of the time interval.

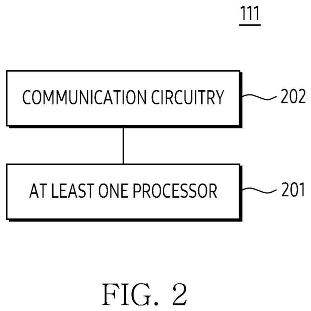

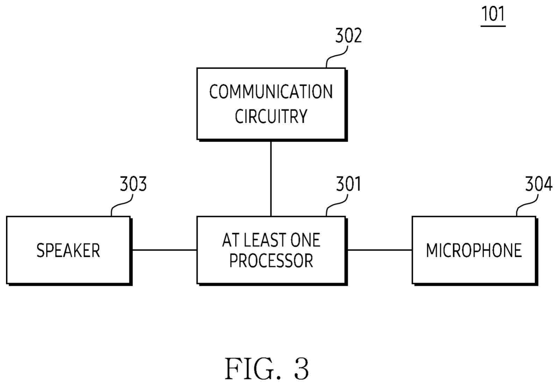

For example, the electronic device 101 may include components used to reduce the length of the time interval. For example, the first external electronic device 111 may include components used to reduce the length of the time interval. The components of the first external electronic device 111 are exemplified in FIG. 2, and the components of the electronic device 101 are exemplified in FIG. 3.

FIG. 2 is a simplified block diagram of an exemplary first external electronic device.

Referring to FIG. 2, the first external electronic device 111 may include at least one processor 201 and communication circuitry 202.

The at least one processor 201 may include at least a portion of the processor 1320 of FIG. 13 or may correspond to at least a portion of the processor 1320 of FIG. 13. The at least one processor 201 may be configured to control the communication circuitry 202. The at least one processor 201 may be configured to execute instructions stored in memory (not illustrated in FIG. 2) to cause the first external electronic device 111 to perform at least a portion of the operations exemplified in the description of FIG. 1. The at least one processor 201 may be configured to execute instructions stored in the memory to cause the first external electronic device 111 to perform at least a portion of operations exemplified in descriptions of FIG. 3 to FIG. 12. For example, the memory may include a non-volatile memory. For example, the memory may include at least a portion (e.g., the non-volatile memory 1334) of the memory 1330 of FIG. 13 or may correspond to the at least a portion of the memory 1330 of FIG. 13.

The communication circuitry 202 may support legacy Bluetooth and/or Bluetooth low energy (BLE). For example, the communication circuitry 202 may be used for communication with the electronic device 101. For example, the communication circuitry 202 may be used for communication with the second external electronic device 112. For example, the communication circuitry 202 may be used for communication with the other electronic device 102. For example, the communication circuitry 202 may be used for the first audio service. For example, the communication circuitry 202 may be used for the second audio service.

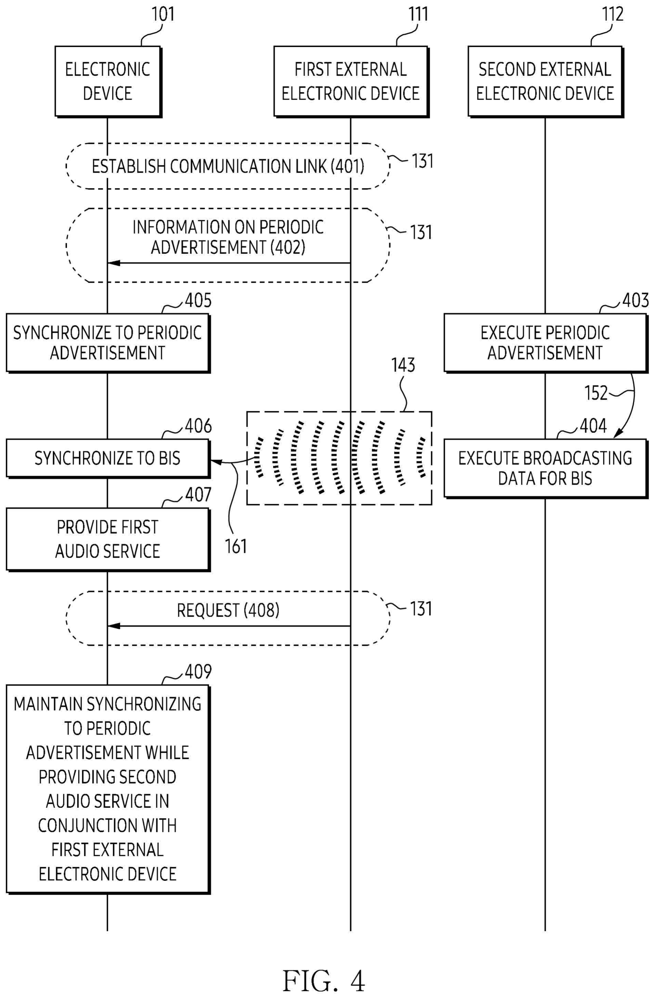

The first external electronic device 111 exemplified in the description of FIG. 2 may execute at least a portion of operations exemplified in descriptions of FIGS. 4, 6, 9, 10, 11, and 12. The operations of the first external electronic device 111 to be exemplified in descriptions of FIGS. 4, 6, 9, 10, 11, and 12 may be executed, caused, or controlled by the at least one processor 201.

FIG. 3 is a simplified block diagram of an exemplary electronic device.

Referring to FIG. 3, an electronic device 101 may include at least a portion of the electronic device 1302 of FIG. 13, or may correspond to at least a portion of the electronic device 1302 of FIG. 13. The electronic device 101 may include at least one processor 301, communication circuitry 302, and a speaker 303. The electronic device 101 may further include a microphone 304.

The at least one processor 301 may be configured to control the communication circuitry 302, the speaker 303, and the microphone 304. The at least one processor 301 may be configured to execute instructions stored in memory (not illustrated in FIG. 3) to cause the electronic device 101 to perform at least a portion of the operations exemplified in the description of FIG. 1. The at least one processor 301 may be configured to execute instructions stored in the memory individually or collectively to cause the electronic device 101 to perform at least a portion of operations exemplified in descriptions of FIGS. 3 to 12. For example, the instructions may cause the electronic device 101, when executed by the at least one processor individually or collectively, to perform at least a portion of the operations exemplified in the descriptions of FIGS. 3 to 12. For example, the memory may include a nonvolatile memory.

The communication circuitry 302 may support legacy Bluetooth and/or Bluetooth low energy (BLE). For example, the communication circuitry 302 may be used for communication with the first external electronic device 111. For example, the communication circuitry 302 may be used for communication with the second external electronic device 112. For example, the communication circuitry 302 may be used for communication with the other electronic device 102. For example, the communication circuitry 302 may be used for the first audio service. For example, the communication circuitry 302 may be used for the second audio service.

The speaker 303 may be configured to output audio. For example, the speaker 303 may output audio provided from the first external electronic device 111. For example, the speaker 303 may output audio provided from the second external electronic device 112. For example, the speaker 303 may be used for the first audio service. For example, the speaker 303 may be used for the second audio service.

The microphone 304 may be configured to obtain audio caused around the electronic device 101. For example, the microphone 304 may be used to obtain audio to be provided to the first external electronic device 111. For example, the microphone 304 may be used to obtain audio to be provided to the other electronic device 102.

The electronic device 101 exemplified in the description of FIG. 3 may execute at least a portion of the operations exemplified in the descriptions of FIGS. 4, 5, 7, 8, 9, 11, and 12. The operations of the electronic device 101 to be exemplified in the descriptions of FIGS. 4, 5, 7, 8, 9, 11, and 12 may be executed, caused, or controlled by the at least one processor 301.

FIG. 4 illustrates an exemplary method of maintaining a periodic advertisement based on a request caused in accordance with a first handover of an audio service.

Referring to FIG. 4, in operation 401, the electronic device 101 and the first external electronic device 111 may establish a communication link 131.

As a non-limiting example, the communication link 131 may be established, based on an input to a user interface displayed on a display of the first external electronic device 111 in accordance with an advertisement of the electronic device 101. For example, the advertisement of the electronic device 101 may be executed based on an input (e.g., user input) caused to the cradle exemplified in the description of FIG. 1. For example, the advertisement of the electronic device 101 may be executed based on detecting that the electronic device 101 is gripped by a user.

As a non-limiting example, the communication link 131 may be established based on an input to a user interface displayed on the display of the first external electronic device 111 in accordance with a signal (or packet) transmitted (or broadcasted) (or advertised) from the electronic device 101 in accordance with an advertisement of the first external electronic device 111.

In operation 402, the first external electronic device 111 may transmit, to the electronic device 101 via the communication link 131, information on the periodic advertisement 142 of the second external electronic device 112.

For example, the second external electronic device 112 may execute one or more advertisements 141 (not illustrated in FIG. 4). For example, the one or more advertisements 141 may indicate advertising at least one first packet (e.g., an ADV_EXT_IND packet) on each of primary advertising channels (e.g., Ch. 37, Ch. 38, and Ch. 39). For example, the at least one first packet may indicate providing additional data via another (or additional) advertisement (e.g., extended advertisement). For example, the at least one first packet may indicate at least one second packet (e.g., an AUX_ADV _IND packet) (or extended advertisement packet). For example, the first external electronic device 111 may receive, based on the at least one first packet received from the second external electronic device 112, from the second external electronic device 112, at least one second packet, which is advertised on a portion of secondary advertising channels different from the primary advertising channels and indicates the periodic advertisement 142 (e.g., operation 403). For example, the first external electronic device 111 may obtain, based on the at least one second packet, the information (e.g., logical link (LL)_PERIODIC_SYNC_1ND) on the periodic advertisement 142, and transmit, to the electronic device 101 via the communication link 131, the information on the periodic advertisement 142.

As a non-limiting example, the first external electronic device 111 may, in response to an input to a user interface displayed on the display of the first external electronic device 111 in accordance with reception of the at least one first packet, obtain the information on the periodic advertisement 142 based on the at least one second packet. For example, the input may be caused to output audio via the electronic device 101, based on data for a BIS from the second external electronic device 112 (e.g., operation 404).

For example, the information on the periodic advertisement 142 may indicate an interval of the periodic advertisement 142 of the second external electronic device 112, a hopping sequency of the periodic advertisement 142 of the second external electronic device 112, and/or an access address for synchronizing to the BIS from the second external electronic device 112.

The electronic device 101 may receive, from the first external electronic device 111 via the communication link 131, the information on the periodic advertisement 142.

In operation 403, the second external electronic device 112 may execute the periodic advertisement 142. For example, the second external electronic device 112 may execute the periodic advertisement 142 by advertising at least one packet. For example, the at least one packet may include information on an interval of the periodic advertisement 142 of the second external electronic device 112, information on an offset of a transmission in accordance with the periodic advertisement 142 of the second external electronic device 112, information on a channel map of the periodic advertisement 142 of the second external electronic device 112, information on the ACL, information on an initial value of cyclic redundancy check (CRC), information on a counter (e.g., PeriodicEventCounter) of an event of the periodic advertisement 142 of the second external electronic device 112, and information (or advertisement data) on a broadcast isochronous group (BIG) (e.g., including multiple instances for the BIS from the second external electronic device 112) scheduled (or generated) (or obtained) by the second external electronic device 112. For example, the periodic advertisement 142 may be used for synchronizing to the BIS from the second external electronic device 112, as indicated by arrow 152.

In operation 404, the second external electronic device 112 may execute broadcasting (143) data for the BIS indicated by the periodic advertisement 142. For example, indicating that the periodic advertisement 142 broadcasts (143) the data for the BIS may mean (or indicate) that at least one packet advertised in accordance with the periodic advertisement 142 includes information on broadcasting (143) the data for the BIS. For example, the data for the BIS may be used to output audio.

In operation 405, the electronic device 101 may synchronize to the periodic advertisement 142, based on the information on the periodic advertisement 142 received in operation 402. For example, the synchronizing to the periodic advertisement 142 may include receiving at least one packet (e.g., the at least one packet exemplified in a description of operation 403) advertised from the second external electronic device 112 in accordance with the periodic advertisement 142. For example, the synchronizing to the periodic advertisement 142 may include recognizing or identifying resources for broadcasting data for the BIS from the second external electronic device 112 (e.g., the data for the BIS exemplified in a description of operation 404).

In operation 406, the electronic device 101 may synchronize to the BIS from the second external electronic device 112, as indicated by arrow 161, in accordance with the synchronizing to the periodic advertisement 142 executed in operation 405. For example, the synchronizing to the BIS may include receiving data for the BIS broadcasted from the second external electronic device 112 (e.g., the data for the BIS as exemplified in the description of operation 404).

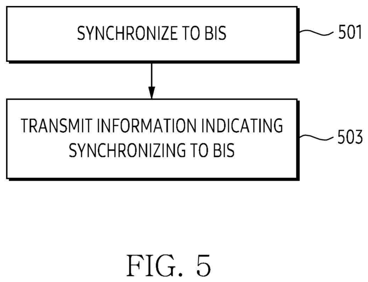

As a non-limiting example, the electronic device 101 may inform (or expose), to the first external electronic device 111, completion (or success) of the synchronizing to the BIS. For example, since the first external electronic device 111, which is a device including a display, may be used to control the electronic device 101, the electronic device 101 may inform the first external electronic device 111 of completion (or success) of the synchronizing of the electronic device 101 to the BIS. For example, since the first external electronic device 111 may be used to control the electronic device 101, the electronic device 101 may inform that the first audio service to be exemplified in operation 407 is provided and/or that the first audio service to be exemplified in operation 407 is provided. This operation of the electronic device 101 is exemplified in a description of FIG. 5.

FIG. 5 illustrates an exemplary method of executing in an electronic device in accordance with synchronizing to a broadcast isochronous stream (BIS).

Referring to FIG. 5, in operation 501, the electronic device 101 may synchronize to the BIS from the second external electronic device 112, based on the synchronizing to the periodic advertisement 142 (e.g., operation 405). Operation 501 may correspond to operation 406 of FIG. 4.

In operation 503, the electronic device 101 may, in response to the synchronizing to the BIS, transmit, to the first external electronic device 111 via the communication link 131, information indicating that the electronic device 101 is synchronized to the BIS. For example, the information indicating completion (or success) of the synchronizing to the BIS may be transmitted or provided to the first external electronic device 111 via a broadcast receive state of a broadcast audio scan service (BASS). For example, the information indicating completion (or success) of the synchronizing to the BIS may be included in a BIS_Sync field. For example, the information indicating completion (or success) of the synchronizing to the BIS may be included in a metadata field. However, it is not limited thereto. For example, the first external electronic device 111 may, based on reception of the information indicating completion (or success) of the synchronizing to the BIS, recognize that a first audio service to be exemplified in operation 407 is provided by the electronic device 101 and/or that the first audio service to be exemplified in operation 407 will be provided by the electronic device 101.

Referring back to FIG. 4, in operation 407, the electronic device 101 may provide a first audio service (e.g., the first audio service exemplified in the description of FIG. 1) that outputs audio via the speaker 303, based on the synchronizing to the BIS in operation 406. For example, since the first audio service is provided by a broadcast from the second external electronic device 112 without using a connection between the electronic device 101 and the second external electronic device 112, the first audio service may also be referred to as a broadcast service.

In operation 408, the first external electronic device 111 may transmit, to the electronic device 101 via the communication link 131, a request to maintain the synchronizing to the periodic advertisement 142, while the first audio service is being provided. For example, the request may be configured to cause the electronic device 101 to cease the synchronizing to the BIS from the second external electronic device 112 and maintain the synchronizing to the periodic advertisement 142. For example, the request may be configured to cause the electronic device 101 to maintain the synchronizing to the periodic advertisement 142, maintain the synchronizing to the BIS from the second external electronic device 112, and cease rendering of the data for the BIS from the second external electronic device 112.

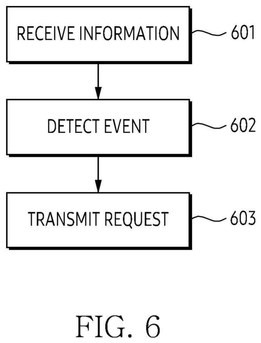

For example, since the first external electronic device 111 is in a state of recognizing that the first audio service is being provided by the electronic device 101, based on reception of the information indicating completion (or success) of the synchronizing to the BIS exemplified in the description of FIG. 5, the first external electronic device 111 may transmit the request. For example, the transmission of the request may be executed based on detecting an event for a start of a second audio service (e.g., the second audio service exemplified in the description of FIG. 1). The transmission of the request, which is executed in response to the event, may be exemplified in a description of FIG. 6.

FIG. 6 illustrates an exemplary method executed in a first external electronic device in accordance with detection of an event.

Referring to FIG. 6, in operation 601, the first external electronic device 111 may receive, from the electronic device 101 via the communication link 131, the information indicating success of the synchronizing to the BIS. For example, operation 601 may correspond to the counter operation in operation 503 of FIG. 5. For example, the first external electronic device 111 may recognize, based on the information, that the first audio service is provided in accordance with the BIS from the second external electronic device 112 and/or that the first audio service will be provided in accordance with the BIS from the second external electronic device 112.

In operation 602, the first external electronic device 111 may detect an event for starting the second audio service.

The event may be caused for the first external electronic device 111. As a non-limiting example, the event may include an incoming call, an outgoing call, media playback, voice recording, or video recording. As a non-limiting example, the event may be caused based on a signal (e.g., a signal for an incoming call) transmitted from another external electronic device to the first external electronic device 111. As a non-limiting example, the event may be caused based on a user input (e.g., a user input for starting a voice recording or a user input for starting a video recording) received for the first external electronic device 111.

In operation 603, the first external electronic device 111 may, in response to the event, transmit the request exemplified in the description of operation 408.

As a non-limiting example, the first external electronic device 111 may, in accordance with detecting the event, recognize that a priority of the second audio service is higher than a priority of the first audio service, or recognize that a priority of the first external electronic device 111 is higher than a priority of the second external electronic device 112. For example, the first external electronic device 111 may, in accordance with the recognition, recognize, determine, or identify ceasing the first audio service being provided using the electronic device 101 and providing the second audio service by using the electronic device 101. For example, the first external electronic device 111 may transmit, to the electronic device 101, the request, based on a determination that ceases the first audio service being provided using the electronic device 101 and provides the second audio service by using the electronic device 101.

As a non-limiting example, the request may be transmitted before operations for providing the second audio service are executed.

As a non-limiting example, the request may be transmitted through a modify source operation of a broadcast audio scan service (BASS).

For example, the request may be indicated via a PA_Sync field and a BIS_Sync field for the modify source operation. For example, for the request that maintains the synchronizing to the periodic advertisement 142, the PA_Sync field may be set, among a first value (e.g., '0x01' (synchronize to PA - PAST available)), a second value (e.g., '0x02' (synchronize to PA - PAST not available)), and a third value (e.g., '0x00' (do not synchronize to PA)), to the first value or the second value. For example, for the request that ceases the synchronizing to the BIS, all BIS subgroup indexes in the BIS_Sync field may be set, among a fourth value (e.g. '0b0' (Do not synchronize to BIS_index[x]), wherein x indicates the number of the index) and a fifth value (e.g. '0b1' (synchronize to BIS_index[x]), to the fourth value. For example, for the request that maintains the synchronizing to the BIS, the BIS_Sync field may be set to the fifth value among the fourth value and the fifth value. When the BIS_Sync field is set to the fifth value for the request, a metadata field for the request may indicate ceasing rendering of the data for the BIS.

For another example, the request may be indicated via a metadata field for the modify source operation. For example, the metadata field may indicate maintaining the synchronizing to the periodic advertisement 142 and ceasing the synchronizing to the BIS. For another example, the metadata field may indicate maintaining the synchronizing to the periodic advertisement 142, maintaining the synchronizing to the BIS, and ceasing rendering of the data for the BIS.

As a non-limiting example, the request may be transmitted via a remove source operation and an add source operation of the BASS. For example, a metadata field for the add source operation may indicate maintaining the synchronizing to the periodic advertisement 142 and ceasing the synchronizing to the BIS, unlike the remove source operation indicating a request that ceases the synchronizing to the periodic advertisement 142 and ceases the synchronizing to the BIS. For another example, the metadata field for the add source operation may indicate maintaining the synchronizing to the periodic advertisement 142, maintaining the synchronizing to the BIS, and ceasing rendering of the data for the BIS, unlike the remove source operation indicating a request that ceases synchronizing to the periodic advertisement 142 and ceases the synchronizing to the BIS.

Referring back to FIG. 4, the electronic device 101 may receive, from the first external electronic device 111 via the communication link 131, the request, in accordance with operation 408.

In operation 409, the electronic device 101 may maintain the synchronizing to the periodic advertisement 142 based on the request, while providing the second audio service in conjunction with the first external electronic device 111.

Although not illustrated in FIG. 4, as a non-limiting example, the first external electronic device 111 may, after transmitting the request (or along with transmitting the request), execute operations to start providing the second audio service.

For example, the first external electronic device 111 may transmit, to the electronic device 101 via the communication link 131, a signal (e.g., including call start information) in accordance with a hands-free profile (HFP), for starting the second audio service, based on detecting the event exemplified in the description of operation 602. For example, the first external electronic device 111 may transmit, to the electronic device 101 via the communication link 131, a signal (e.g., including call start information) in accordance with a telephone bearer service (TBS), for starting the second audio service, based on detecting the event. For example, the first external electronic device 111 may transmit, to the electronic device 101 via the communication link 131, a signal (e.g., including media playback start information) in accordance with an advanced audio distribution profile (A2DP). For example, the first external electronic device 111 may transmit, to the electronic device 101 via the communication link 131, a signal (e.g., including media playback start information) in accordance with a media control profile (MCP).

Although not illustrated in FIG. 4, as a non-limiting example, the first external electronic device 111 may execute operations to provide the second audio service.

For example, the first external electronic device 111 may connect or establish an audio channel with the electronic device 101 via the communication link 131, and transmit data for the second audio service to the electronic device 101 via the connected audio channel. For example, the first external electronic device 111 may receive, from the electronic device 101 through the audio channel, data for the second audio service. For example, the second audio service may be provided according to outputting audio via the speaker 303 of the electronic device 101 based on data transmitted from the first external electronic device 111 via the audio channel. For example, the second audio service may be provided according to transmitting data for audio obtained via the microphone 304 of the electronic device 101 to the first external electronic device 111 via the audio channel.

As a non-limiting example, the first external electronic device 111 may connect or establish a link of synchronous connection-oriented (SCO) via the communication link 131, and provide the second audio service by transmitting or receiving the data for the second audio service via the link of the SCO. As a non-limiting example, the first external electronic device 111 may connect or establish a link of an extended SCO (eSCO) via the communication link 131, and provide the second audio service by transmitting or receiving the data for the second audio service via the link of the eSCO. As a non-limiting example, the first external electronic device 111 may connect or establish a link of a connected isochronous stream (CIS) via the communication link 131, and provide the second audio service by transmitting or receiving the data for the second audio service through the link of the CIS.

For example, the electronic device 101 may execute a first handover from the first audio service to the second audio service, based on connecting the audio channel exemplified above, in conjunction with the first external electronic device 111. For example, the electronic device 101 may provide, based on the first handover, the second audio service in conjunction with the first external electronic device 111. For example, the second audio service provided in conjunction with the first external electronic device 111 may include outputting audio via the speaker 303 of the electronic device 101 based on data received from the first external electronic device 111. For example, the second audio service provided in conjunction with the first external electronic device 111 may include transmitting information on audio obtained via the microphone 304 of the electronic device 101 to the first external electronic device 111.

For example, the electronic device 101 may maintain the synchronizing to the periodic advertisement 142 based on the request, while providing the second audio service based on data received from the first external electronic device 111 via the communication link 131. For example, for the first audio service capable of being resumed in accordance with the second handover from the second audio service to the first audio service, the electronic device 101 may maintain the synchronizing to the periodic advertisement 142. For example, in order to execute resuming the first audio service with a faster response speed, the electronic device 101 may maintain the synchronizing to the periodic advertisement 142 while the second audio service is provided.

For example, maintaining the synchronizing to the periodic advertisement 142 based on the request while the second audio service is provided may include receiving at least a portion of packets advertised from the second external electronic device 112 in accordance with the periodic advertisement 142 while the second audio service is provided. As a non-limiting example, maintaining the synchronizing to the periodic advertisement 142 based on the request while the second audio service is provided may include receiving all of the packets advertised from the second external electronic device 112 in accordance with the periodic advertisement 142 while the second audio service is provided. As a non-limiting example, maintaining the synchronizing to the periodic advertisement 142 based on the request while the second audio service is provided may include receiving a portion of the packets advertised from the second external electronic device 112 in accordance with the periodic advertisement 142 while the second audio service is provided. For example, the electronic device 101 may receive, while the second audio service is provided, at least one packet advertised from the second external electronic device 112 via the periodic advertisement 142 of an event of the 2n-1 counter, and bypass, while the second audio service is provided, receiving at least one packet advertised from the second external electronic device 112 via the periodic advertisement 142 of an event of the 2n counter. 'n' may be any natural number greater than or equal to 1. As a non-limiting example, specifying packets to be received by the electronic device 101 according to maintaining the periodic advertisement 142 may be set by the electronic device 101 or may be set by the first external electronic device 111. For example, when the packets are specified by the first external electronic device 111, the setting of the first external electronic device 111 may be indicated via a metadata field for the modify source operation. However, it is not limited thereto.

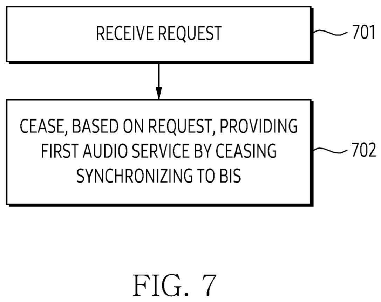

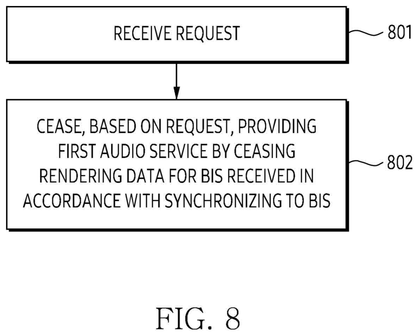

For example, the electronic device 101 may cease, based on the request indicating ceasing the synchronizing to the BIS from the second external electronic device 112, the synchronizing to the BIS while the second audio service is provided. For example, the electronic device 101 may, based on the request indicating maintaining the synchronizing to the BIS from the second external electronic device 112, maintain the synchronizing to the BIS while the second audio service is provided. The ceasing the synchronizing to the BIS and the maintaining the synchronizing to the BIS are exemplified in a description of FIG. 7 and a description of FIG. 8.

FIGS. 7 and 8 illustrate an exemplary method executed in an electronic device in accordance with reception of a request.

Referring to FIG. 7, in operation 701, the electronic device 101 may receive, from the first external electronic device 111 via the communication link 131, the request. Operation 701 may correspond to operation 408 of FIG. 4.

In operation 702, the electronic device 101 may cease, based on the request, providing the first audio service by ceasing the synchronizing to the BIS from the second external electronic device 112, while the second audio service is being provided. For example, on a condition that the providing of the second audio service is started within the electronic device 101, the electronic device 101 may cease, terminate, refrain from, bypass, or skip receiving the data for the BIS from the second external electronic device 112, based on the synchronizing to the periodic advertisement 142 maintained in accordance with the request. For example, since the receiving of the data for the BIS is ceased in accordance with the request, the first audio service may be ceased.

Referring to FIG. 8, in operation 801, the electronic device 101 may receive, from the first external electronic device 111 via the communication link 131, the request. Operation 801 may correspond to operation 408 of FIG. 4.

In operation 802, the electronic device 101 may cease, based on the request, providing the first audio service, while the second audio service is being provided, by ceasing rendering the data for the BIS broadcasted from the second external electronic device 112 in accordance with the synchronizing to the BIS from the second external electronic device 112. For example, the electronic device 101 may maintain, based on the request, receiving the data for the BIS from the second external electronic device 112, in accordance with the synchronizing to the periodic advertisement 142 being maintained via the request. For example, on a condition that the providing of the second audio service is started within the electronic device 101, the electronic device 101 may, based on the request, cease, terminate, refrain from, bypass, or skip rendering the data for the BIS received from the second external electronic device 112. For example, since the rendering of the data for the BIS is ceased in accordance with the request, the first audio service may be ceased.

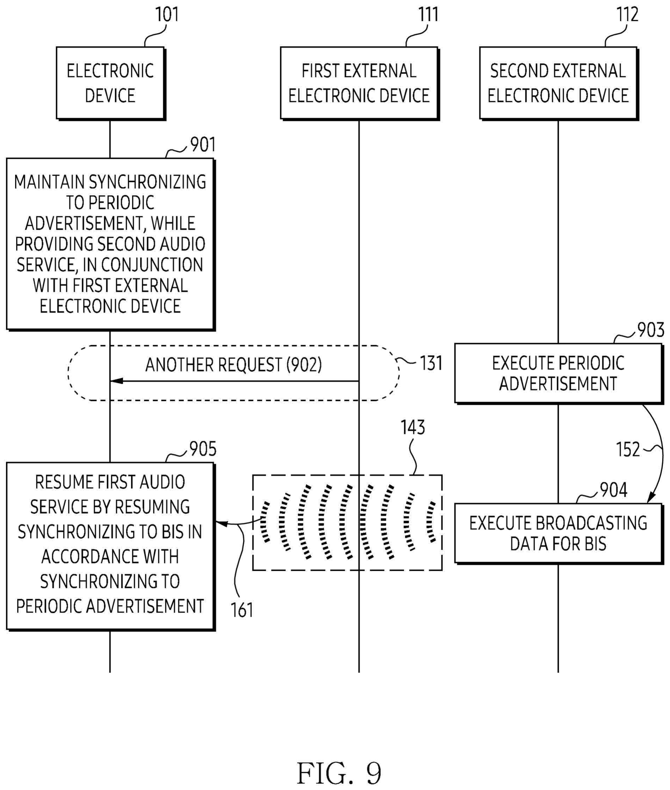

As described above, the electronic device 101 may maintain, while the second audio service is provided, the synchronizing to the periodic advertisement 142 for the first audio service, based on the request received from the first external electronic device 111. As exemplified in the description of FIG. 9 below, the electronic device 101 may resume providing the first audio service with a faster speed in response to another event for terminating the second audio service, by maintaining the synchronizing to the periodic advertisement 142 while the second audio service is provided. Resuming the first audio service is exemplified in a description of FIG. 9.

The description of FIGS. 4 to 8 describes operations executed within the electronic device 101 and the first external electronic device 111 when an audio service provided using the electronic device 101 is changed from the first audio service to the second audio service, but this is only exemplary. The operations may also be executed to change the first audio service to a third audio service provided based on a broadcast from another external electronic device (hereinafter, a third external electronic device).

For example, the first external electronic device 111 may receive a user input indicating a request to provide the third audio service using the electronic device 101, while providing the first audio service, as in operation 407. For example, the first external electronic device 111 may, in response to the user input, transmit a request to the electronic device 101 via the communication link 131, as in operation 408. The request may include information on a periodic advertisement of the third external electronic device. The request may indicate maintaining the synchronizing to the BIS from the second external electronic device 112, as in the request in operation 408. For example, in response to receiving the request from the first external electronic device 111, the electronic device 101 may execute, based on the information on the periodic advertisement of the third external electronic device, synchronizing to the periodic advertisement of the third external electronic device for the third audio service, and execute, based on the synchronizing to the periodic advertisement of the third external electronic device, synchronizing to the BIS from the third external electronic device. For example, the electronic device 101 may provide, based on the synchronizing to the BIS from the third external electronic device, the third audio service. For example, in response to receiving the request from the first external electronic device 111, the electronic device 101 may maintain the synchronizing to the periodic advertisement 142 while executing at least one operation for the third audio service (e.g., executing the synchronizing to the periodic advertisement of the third external electronic device, executing the synchronizing to the BIS from the third external electronic device, and/or providing the third audio service). For example, maintaining the synchronizing to the periodic advertisement 142 may be executed for responsiveness of a change from the third audio service to the first audio service.

As another example, the electronic device 101 may detect an event (or a user input (e.g., a press input on a physical button exposed through a portion of a housing of the electronic device 101) for starting the third audio service, while providing the first audio service. For example, in response to the event, the electronic device 101 may attempt synchronizing to the periodic advertisement of the third external electronic device for the third audio service. As a non-limiting example, the electronic device 101 may execute the synchronizing to the periodic advertisement of the third external electronic device, based on information on the periodic advertisement of the third external electronic device received from the first external electronic device 111. For example, the electronic device 101 may execute synchronizing to the BIS from the third external electronic device, based on the synchronizing of the third external electronic device to the periodic advertisement. For example, the electronic device 101 may provide the third audio service, based on the synchronizing to the BIS from the third external electronic device. For example, providing the first audio service may be ceased in accordance with providing the third audio service. For example, in response to the user input, the electronic device 101 may maintain the synchronizing to the periodic advertisement 142, while executing at least one operation (e.g., executing the synchronizing to the periodic advertisement of the third external electronic device, executing the synchronizing to the BIS from the third external electronic device, and/or providing the third audio service) for the third audio service. For example, maintaining the synchronizing to the periodic advertisement 142 may be executed for responsiveness of a change from the third audio service to the first audio service.

FIG. 9 illustrates an exemplary method of resuming synchronizing to a BIS based on another request caused in accordance with a second handover of an audio service.

Referring to FIG. 9, in operation 901, the electronic device 101 may maintain the synchronizing to the periodic advertisement 142, while providing the second audio service, in conjunction with the first external electronic device 111. For example, operation 901 may correspond to operation 409 of FIG. 4.

In operation 903, the second external electronic device 112 may execute the periodic advertisement 142. For example, since the first audio service provided from the second external electronic device 112 may not be a service specified or dedicated (only) for the electronic device 101, the second external electronic device 112 may execute the periodic advertisement 142 regardless of the first audio service ceased within the electronic device 101. For example, the electronic device 101 may maintain, while the second audio service is provided, the synchronizing to the periodic advertisement 142 executed by the second external electronic device 112 in operation 903, as in operation 901. For example, operation 903 may correspond to operation 403 of FIG. 4.

In operation 904, the second external electronic device 112 may execute broadcasting (143) the data for the BIS from the second external electronic device 112 associated with the periodic advertisement 142, as indicated by arrow 152. For example, since the first audio service provided from the second external electronic device 112 may not be a service specified or dedicated (only) for the electronic device 101, the second external electronic device 112 may maintain broadcasting the data for the BIS, regardless of the first audio service ceased within the electronic device 101.

In operation 902, the first external electronic device 111 may transmit, to the electronic device 101 via the communication link 131, another request to resume the synchronizing to the BIS.

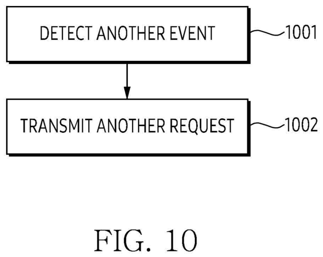

For example, the other request may be transmitted in accordance with detection of another event for termination (or cessation) of the second audio service. The other request transmitted in response to the other event is exemplified in a description of FIG. 10.

FIG. 10 illustrates an exemplary method executed in a first external electronic device in accordance with detection of another event.

Referring to FIG. 10, in operation 1001, the first external electronic device 111 may detect another event for ceasing the second audio service.

For example, in response to the other event, the first external electronic device 111 may transmit, to the electronic device 101 via the communication link 131, information to terminate the second audio service. As a non-limiting example, the first external electronic device 111 may transmit, to the electronic device 101 via the communication link 131, a signal in accordance with HFP (e.g., including call termination information) (not illustrated in FIG. 10). As a non-limiting example, the first external electronic device 111 may transmit, to the electronic device 101 via the communication link 131, a signal in accordance with TBS (e.g., including call termination information) (not illustrated in FIG. 10). As a non-limiting example, the first external electronic device 111 may transmit, to the electronic device 101 via the communication link 131, a signal in accordance with A2DP (e.g., including media playback termination information) (not illustrated in FIG. 10). As a non-limiting example, the first external electronic device 111 may transmit, to the electronic device 101 via the communication link 131, a signal in accordance with MCP (e.g., including media playback termination information) (not illustrated in FIG. 10).

As a non-limiting example, the first external electronic device 111 may disconnect or release an audio channel (e.g., a link of SCO, a link of eSCO, or a link of CIS) for the second audio service after transmitting the information or based on transmitting the information.

In operation 1002, the first external electronic device 111 may transmit, to the electronic device 101 via the communication link 131, the other request exemplified in the description of operation 902 of FIG. 9, based on the other event.

For example, the other request may be transmitted via a modify source operation of BASS.

For example, on a condition that the request transmitted to the electronic device 101 in operation 408 is a request that ceases the synchronizing to the BIS, the other request may be indicated via a BIS_Sync field for the modify source operation. For example, at least a portion of BIS subgroup indexes of the BIS_Sync field may be set to the fifth value among the fourth value and the fifth value, for the other request to resume the synchronizing to the BIS.

For example, on a condition that the request transmitted to the electronic device 101 in operation 408 is a request that ceases the synchronizing to the BIS, or a request that maintains the synchronizing to the BIS and ceases rendering of the data for the BIS, the other request may indicate via a metadata field for the modify source. For example, the metadata field may indicate resuming the synchronizing to the BIS on a condition that the request transmitted to the electronic device 101 in operation 408 is a request that ceases the synchronizing to the BIS. For example, the metadata field may indicate resuming rendering of the data for the BIS on a condition that the request transmitted to electronic device 101 in operation 408 is a request that maintains the synchronizing to the BIS and ceases rendering of the data for the BIS.

For example, on a condition that the request transmitted to the electronic device 101 in operation 408 was transmitted via a remove source operation and an add source operation, the other request may be transmitted via an add source operation of BASS. For example, the other request may be indicated via a BIS_Sync field for the add source operation. For example, at least a portion of BIS subgroup indexes of the BIS_Sync field may be set to the fifth value among the fourth value and the fifth value, for the other request to resume the synchronizing to the BIS.

Referring back to FIG. 9, the electronic device 101 may receive, from the first external electronic device 111 via the communication link 131, the other request.

In operation 905, in response to the other request, the electronic device 101 may resume the first audio service by resuming the synchronizing to the BIS from the second external electronic device 112 as indicated by arrow 161, in accordance with the synchronizing to the periodic advertisement 142 maintained while the second audio service is provided. For example, in response to the other request, the electronic device 101 may resume the first audio service based on the second handover by resuming the synchronizing to the BIS. For example, the electronic device 101 may cease the second audio service and resume the first audio service, based at least in part on the other request. For example, the electronic device 101 may ceases the second audio service to resume the first audio service, in response to the other request.

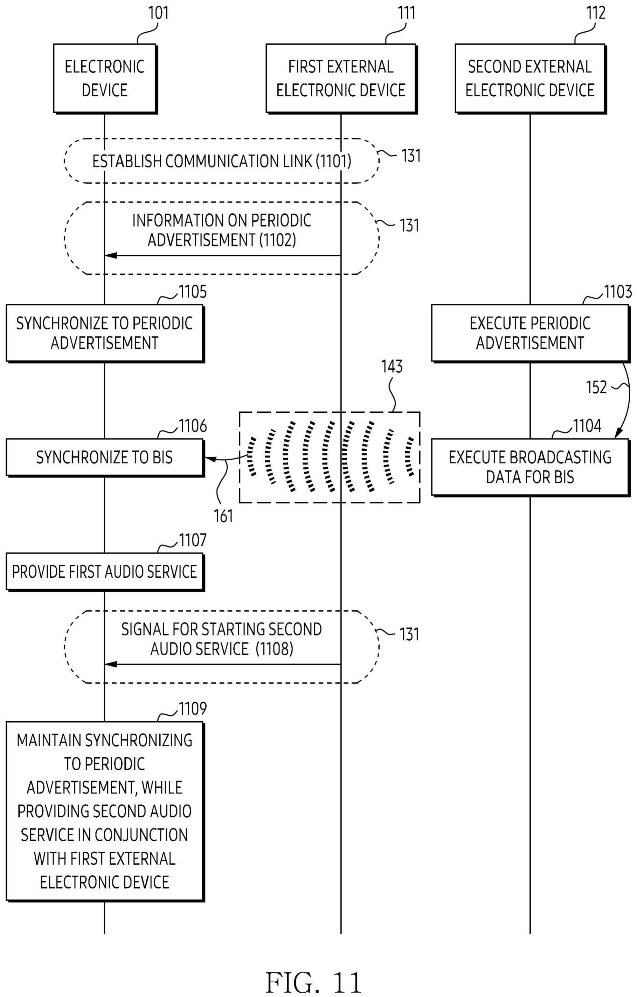

The operations exemplified in the descriptions of FIGS. 4 to 10 may be executed to maintain the periodic advertisement 142 on a condition that the first external electronic device 111 is a device capable of transmitting the request 408 and the other request 902. However, this is merely exemplary. For example, the electronic device 101 may maintain the periodic advertisement 142 for the first audio service while the second audio service is provided, via communication with a device incapable of transmitting the request 408 and the other request 902, rather than a device capable of transmitting the request 408 and the other request 902 (e.g., the first external electronic device 111). The operations of the electronic device 101 for maintaining the periodic advertisement 142 for the first audio service while the second audio service is provided without the request 408 and the other request 902 are exemplified in a description of FIG. 11. The first external electronic device 111 exemplified in accordance with the description of FIG. 11 may be a device that does not transmit the request 408 and the other request 902.

FIG. 11 illustrates an exemplary method of maintaining a periodic advertisement based on a signal caused for a first handover of an audio service.

Referring to FIG. 11, in operation 1101, the electronic device 101 and the first external electronic device 111 may establish a communication link 131. For example, operation 1101 may correspond to operation 401 of FIG. 4.

In operation 1102, the first external electronic device 111 may transmit, to the electronic device 101 via the communication link 131, information on a periodic advertisement 142 of the second external electronic device 112. For example, operation 1102 may correspond to operation 402 of FIG. 4.

In operation 1103, the second external electronic device 112 may execute the periodic advertisement 142. For example, operation 1103 may correspond to operation 403 of FIG. 4.

In operation 1104, the second external electronic device 112 may execute broadcasting (143) data for the BIS indicated by the periodic advertisement 142. For example, operation 1104 may correspond to operation 404 of FIG. 4.

In operation 1105, the electronic device 101 may synchronize to the periodic advertisement 142. For example, operation 1105 may correspond to operation 405 of FIG. 4.

In operation 1106, the electronic device 101) may synchronize to the BIS from the second external electronic device 112, as indicated by arrow 161, in accordance with the synchronizing to the periodic advertisement 142 executed in operation 1105. For example, operation 1106 may correspond to operation 406 of FIG. 4.

In operation 1107, the electronic device 101 may provide the first audio service outputting audio via the speaker 303, based on the synchronizing to the BIS in operation 1106. Operation 1107 may correspond to operation 407 of FIG. 4.

In operation 1108, the first external electronic device 111 may transmit, to the electronic device 101 via the communication link 131, a signal for a start of the second audio service via the communication link 131, while the first audio service is provided. For example, the signal may indicate requesting operations for starting the second audio service.

For example, the signal may be variously implemented. As a non-limiting example, the signal may include call start information in accordance with HFP. As a non-limiting example, the signal may include call start information in accordance with TBS. As a non-limiting example, the signal may include media playback start information in accordance with A2DP. As a non-limiting example, the signal may include media playback start information in accordance with MCP.

For example, the electronic device 101 may receive, from the first external electronic device 111 via the communication link 131, the signal.

In operation 1109, based on the signal, the electronic device 101 may maintain synchronizing to the periodic advertisement 142, while ceasing providing the first audio service and providing the second audio service in conjunction with the first external electronic device 111.

As a non-limiting example, in response to the signal, the electronic device 101 may compare a priority of the first audio service with a priority of the second audio service. For example, based on the comparison, the electronic device 101 may recognize, determine, or check that a priority of the first audio service provided via the second external electronic device 112 with which a communication link is not established is lower than a priority of the second audio service provided via the first external electronic device 111 with which a communication link 131 is established. For example, based on the comparison, the electronic device 101 may recognize, determine, or check that a priority of the first audio service provided based on connectionless is lower than a priority of the second audio service provided based on a connection.

As a non-limiting example, in response to the signal, the electronic device 101 may compare a priority of the first external electronic device 111 with a priority of the second external electronic device 112. For example, based on the comparison, the electronic device 101 may determine, recognize, or check that a priority of the first external electronic device 111 that has establish the communication link 131 is higher than a priority of the second external electronic device 112 that has not establish a communication link. For example, based on the comparison, the electronic device 101 may determine, recognize, or check that a priority of the first external electronic device 111 that is available for controlling the electronic device 101 is higher than a priority of the second external electronic device 112 that is unavailable for controlling the electronic device 101. For example, based on the comparison, the electronic device 101 may determine, recognize, or check that a priority of the first external electronic device 111 that is logged in a user account corresponding to a user account of the electronic device 101 is higher than a priority of the second external electronic device 112 that is logged in a user account different from the user account of the electronic device 101.

As a non-limiting example, based on a result of the comparison, the electronic device 101 may determine to cease providing the first audio service and provide the second audio service, in response to the signal.

As a non-limiting example, providing the first audio service may be variously implemented. For example, the electronic device 101 may cease providing the first audio service by ceasing the synchronizing to the BIS in response to the signal. For example, the electronic device 101 may cease providing the first audio service, by ceasing rendering of the data for the BIS received from the second external electronic device 112 in accordance with the synchronizing to the BIS in response to the signal.

Although not illustrated in FIG. 11, as a non-limiting example, the first external electronic device 111 may execute operations for providing the second audio service.

For example, the first external electronic device 111 may connect or establish, via the communication link 131, an audio channel with the electronic device 101, and transmit, to the electronic device 101 via the connected audio channel, data for the second audio service. For example, the first external electronic device 111 may receive, from the electronic device 101 via the audio channel, data for the second audio service. For example, the second audio service may be provided in accordance with outputting audio via the speaker 303 of the electronic device 101 based on data transmitted from the first external electronic device 111 via the audio channel. For example, the second audio service may be provided in accordance with transmitting data on audio obtained via the microphone 304 of the electronic device 101 to the first external electronic device 111 via the audio channel.

As a non-limiting example, the first external electronic device 111 may connect or establish a link of a synchronous connection-oriented (SCO) via the communication link 131, and provide the second audio service by transmitting or receiving the data for the second audio service via the link of the SCO. As a non-limiting example, the first external electronic device 111 may connect or establish a link of extended SCO (eSCO) via the communication link 131, and provide the second audio service by transmitting or receiving the data for the second audio service via the link of the eSCO. As a non-limiting example, the first external electronic device 111 may connect or establish a link of a connected isochronous stream (CIS) via the communication link 131, and provide the second audio service by transmitting or receiving the data for the second audio service via the link of the CIS.

For example, the electronic device 101 may execute the first handover from the first audio service to the second audio service, based on connecting the audio channel exemplified above, in conjunction with the first external electronic device 111. For example, based on the first handover, the electronic device 101 may provide the second audio service in conjunction with the first external electronic device 111. For example, the second audio service provided in conjunction with the first external electronic device 111 may include outputting audio via the speaker 303 of the electronic device 101 based on data received from the first external electronic device 111. For example, the second audio service provided in conjunction with the first external electronic device 111 may include transmitting, to the first external electronic device 111, information on audio obtained via the microphone 304 of the electronic device 101.

For example, the electronic device 101 may maintain the synchronizing to the periodic advertisement 142 based on the signal, while providing the second audio service based on data received from the first external electronic device 111 via the communication link 131. For example, the electronic device 101 may maintain the synchronizing to the periodic advertisement 142 for the first audio service capable of being resumed in accordance with a second handover from the second audio service to the first audio service. For example, the electronic device 101 may maintain the synchronizing to the periodic advertisement 142 while the second audio service is provided, in order to execute resuming of the first audio service with a faster response speed. For example, the electronic device 101 may maintain the synchronizing to the periodic advertisement 142 even when the first audio service is ceased, to resume the first audio service with a faster response in accordance with the interruption of the second audio service capable of being caused later.

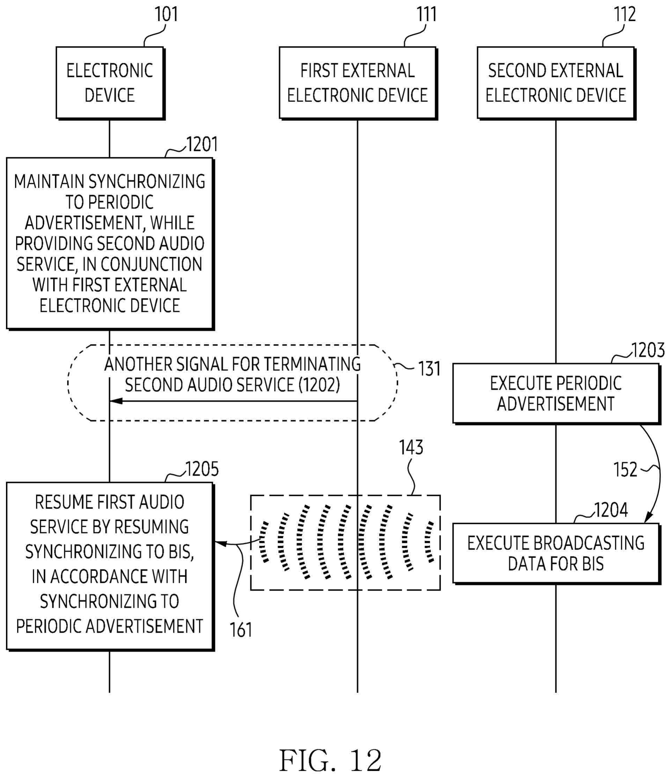

As described above, the electronic device 101 may maintain, while the second audio service is provided, the synchronizing to the periodic advertisement 142 for the first audio service, based on the signal received from the first external electronic device 111. The electronic device 101 may resume providing the first audio service with a faster speed in response to another event for terminating the second audio service, via maintaining the synchronizing to the periodic advertisement 142 while the second audio service is provided, as exemplified in the description of FIG. 12 below. Resuming the first audio service is exemplified in the description of FIG. 12.

FIG. 12 illustrates an exemplary method of resuming synchronizing to a BIS based on another signal caused for a second handover of an audio service.

Referring to FIG. 12, in operation 1201, the electronic device 101 may maintain the synchronizing to the periodic advertisement 142, while providing the second audio service, in conjunction with the first external electronic device 111. For example, operation 1201 may correspond to operation 901 of FIG. 9.

In operation 1203, the second external electronic device 112 may execute the periodic advertisement 142. For example, operation 1203 may correspond to operation 903 of FIG. 9.

In operation 1204, the second external electronic device 112 may broadcast the data for the BIS from the second external electronic device 112 associated with the periodic advertisement 142, as indicated by arrow 152. For example, operation 1204 may correspond to operation 904 of FIG. 9.

In operation 1202, the first external electronic device 111 may transmit, to the electronic device 101 via the communication link 131, another signal for terminating the second audio service.

For example, the other signal may be variously implemented. As a non-limiting example, the other signal may include call termination information in accordance with HFP. As a non-limiting example, the other signal may include call termination information in accordance with TBS. As a non-limiting example, the other signal may include media playback termination information in accordance with A2DP. As a non-limiting example, the other signal may include media playback termination information in accordance with MCP.

For example, the other signal may be transmitted in response to detecting another event for terminating the second audio service.

For example, in response to the other event, the first external electronic device 111 may transmit, to the electronic device 101 via the communication link 131, information for terminating the second audio service. As a non-limiting example, the first external electronic device 111 may transmit, to the electronic device 101 via the communication link 131, the other signal in accordance with HFP (e.g., including call termination information). As a non-limiting example, the first external electronic device 111 may transmit, to the electronic device 101 via the communication link 131, the other signal in accordance with TBS (e.g., including call termination information). As a non-limiting example, the first external electronic device 111 may transmit, to the electronic device 101 via the communication link 131, the other signal in accordance with A2DP (e.g., including media playback termination information). As a non-limiting example, the first external electronic device 111 may transmit, to the electronic device 101 via the communication link 131, the other signal in accordance with MCP (e.g., including media playback termination information).

As a non-limiting example, the first external electronic device 111 may disconnect or release an audio channel (e.g., a link of SCO, a link of eSCO, or a link of CIS) for the second audio service, after transmitting the other signal or based on transmitting the other signal.

For example, the electronic device 101 may receive, from the first external electronic device 111 via the communication link 131, the other signal.

In operation 1205, based on the other signal, the electronic device 101 may resume the first audio service by resuming synchronizing to the BIS, as indicated by arrow 161, in accordance with synchronizing to the periodic advertisement 142 maintained while the second audio service is provided. For example, based on the other signal, the electronic device 101 may resume the first audio service based on the second handover by resuming the synchronizing to the BIS. For example, the electronic device 101 may cease the second audio service and resume the first audio service, based at least in part on the other signal.

FIG. 12 illustrates resuming the synchronizing to the BIS to resume the first audio service, but this is merely exemplary. For example, the electronic device 101 may resume the first audio service by resuming rendering of the data for the BIS, on a condition of maintaining the synchronizing to the BIS and ceasing rendering of the data for the BIS in operation 1109.

As described above, the electronic device 101 may, in response to the other signal, resume the first audio service in accordance with synchronizing to the periodic advertisement 142 that was maintained based on the signal (e.g., operation 1108). For example, the electronic device 101 may improve quality of an audio service through this operation.

The operations of the electronic device 101 and the first external electronic device 111 exemplified above may be executed by the electronic device 1301 and the electronic device 1302 in the description of FIG. 13 described below.

FIG. 13 is a block diagram illustrating an electronic device 1301 in a network environment 1300 according to various embodiments. Referring to FIG. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module(SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to an embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, an HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to an embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 1364dB or less) for implementing mMTC, or U-plane latency (e.g., 0.5ms or less for each of downlink (DL) and uplink (UL), or a round trip of 13ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

As described above, an electronic device (e.g., the electronic device 101) may comprise memory configured to store instructions, communication circuitry (e.g., the communication circuitry 302) for Bluetooth low energy (BLE), a speaker (e.g., the speaker 303), and at least one processor (e.g., the at least one processor 301). The at least one processor may be configured to execute the instructions to cause the electronic device to, based on synchronizing, in accordance with synchronizing to a periodic advertisement of a second external electronic device (e.g., the second external electronic device 112) indicated by information from a first external electronic device (e.g., the first external electronic device 111), to a broadcast isochronous stream (BIS) from the second external electronic device, provide a first audio service outputting audio via the speaker. The at least one processor may be configured to execute the instructions to cause the electronic device to, while the first audio service is provided, receive, via a communication link between the electronic device and the first external electronic device, from the first external electronic device, a request that ceases the synchronizing to the BIS and maintains the synchronizing to the periodic advertisement, using the communication circuitry. The at least one processor may be configured to execute the instructions to cause the electronic device to, while providing a second audio service based on data received via the communication link from the first external electronic device, cease the synchronizing to the BIS and maintain the synchronizing to the periodic advertisement.

For example, the at least one processor may be configured to execute the instructions to cause the electronic device to maintain the synchronizing to the periodic advertisement by receiving at least a portion of packets advertised from the second external electronic device in accordance with the periodic advertisement based on the request while providing the second audio service.

For example, the at least one processor may be configured to execute the instructions to cause the electronic device to receive the request from the first external electronic device, through a modify source operation of a broadcast audio scan service (BASS).

For example, the request may indicate maintaining the synchronizing to the periodic advertisement using a PA_sync filed of the modify source operation, and ceasing the synchronizing to the BIS, using a BIS_sync field of the modify source operation.

For example, the at least one processor may be configured to execute the instructions to cause the electronic device to, while providing the second audio service, receive, via the communication link, from the first external electronic device, another request to resume the synchronizing to the BIS, using the communication circuitry, and in response to the other request, resume to provide the first audio service by resuming the synchronizing to the BIS in accordance with the synchronizing to the periodic advertisement maintained based on the request.

For example, the at least one processor may be configured to execute the instructions to cause the electronic device to, through a modify source operation of BASS, receive the other request from the first external electronic device.

For example, the other request may indicate resuming the synchronizing to the BIS, using a BIS_sync filed of the modify source operation.

For example, the at least one processor may be configured to execute the instructions to cause the electronic device to cease providing the second audio service, for resuming to provide the first audio service in response to the other request.

For example, the at least one processor may be configured to execute the instructions to cause the electronic device to, based on outputting audio via the speaker based on data received via the communication link from the first external electronic device, provide the second audio service.

For example, the electronic device may comprise a microphone (e.g., the microphone 304). For example, the at least one processor may be configured to execute the instructions to cause the electronic device to, based on transmitting, via the communication link, to the first external electronic device, data regarding audio obtained via the microphone using the communication circuitry, provide the second audio service.

As described above, an electronic device (e.g., the electronic device 101) may comprise memory configured to store instructions, communication circuitry (e.g., the communication circuitry 302) for Bluetooth low energy (BLE), a speaker (e.g., the speaker 303), and at least one processor (e.g., the at least one processor 301). The at least one processor may be configured to execute the instructions to cause the electronic device to, based on synchronizing, in accordance with synchronizing to a periodic advertisement of a second external electronic device (e.g., the second external electronic device 112) indicated by information from a first external electronic device (e.g., the first external electronic device 111), to a broadcast isochronous stream (BIS) from the second external electronic device, provide a first audio service outputting audio via the speaker, while the first audio service is provided, receive, via a communication link between the electronic device and the first external electronic device, from the first external electronic device, a signal for starting a second audio service, using the communication circuitry, in response to the signal, cease providing the first audio service based on data for the BIS broadcasted from the second external electronic device, and based on the signal, maintain the synchronizing to the periodic advertisement, while ceasing providing the first audio service and providing the second audio service based on data received via the communication link from the first external electronic device.

For example, the at least one processor may be configured to execute the instructions to cause the electronic device to maintain the synchronizing of the periodic advertisement, by receiving at least a portion of packets advertised from the second external electronic device in accordance with the periodic advertisement, based on the signal, while providing the second audio service.

For example, the at least one processor may be configured to execute the instructions to cause the electronic device to cease providing the first audio service, by ceasing receiving the data for the BIS, in response to the signal.

For example, the at least one processor may be configured to execute the instructions to cause the electronic device to cease providing the first audio service, by ceasing rendering the received data for the BIS, in accordance with the synchronizing to the periodic advertisement from the second external electronic device, using the communication circuitry, in response to the signal.

For example, the signal may include call start information in accordance with a hands-free profile (HFP) or a telephone bearer service (TBS).

For example, the signal may include media playback start information in accordance with an advanced audio distribution profile (A2DP) or a media control profile (MCP).

For example, the at least one processor may be configured to execute the instructions to cause the electronic device to receive, from the first external electronic device via the communication link, another signal for terminating the second audio service using the communication circuitry, while providing the second audio service, and resume providing the first audio service, by resuming the synchronizing to the BIS in accordance with the synchronizing to the periodic advertisement maintained based on the signal in response to the other signal.

For example, the at least one processor may be configured to execute the instructions to cause the electronic device to transmit, to the first external electronic device via the communication link, information indicating that the electronic device is synchronized to the BIS, using the communication circuitry.

As described above, an electronic device (e.g., the first external electronic device 111) may comprise communication circuitry (e.g., the communication circuitry 201) for Bluetooth low energy (BLE) and at least one processor (e.g., the at least one processor 201). For example, the at least one processor may be configured to execute the instructions to cause the electronic device to transmit, to another electronic device (e.g., the electronic device 101) via a communication link between the electronic device and the other electronic device, first information on a periodic advertisement of an external electronic device (e.g., the second external electronic device 112), using the communication circuitry, receive, via the communication link, from the other electronic device, second information indicating a state of the other electronic device synchronized to a broadcast isochronous stream (BIS) from the external electronic device in accordance with the first information, using the communication circuitry, after the second information is received, detect, an event for starting an audio service provided via the communication link, in conjunction with the other electronic device, and in response to the event, transmit, to the other electronic device via the communication link, a request that ceases the synchronizing to the BIS and maintains the synchronizing of the periodic advertisement, using the communication circuitry.

For example, the at least one processor may be configured to execute the instructions to cause the electronic device to detect another event for ceasing the audio service provided via the communication link in conjunction with other electronic devices, and in response to the other events, transmit, to the other electronic device via the communication link, another request to resume the synchronizing to the BIS, using the communication circuitry.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
communication circuitry for Bluetooth low energy (BLE);
a speaker;
memory comprising one or more storage media storing instructions; and
at least one processor comprising processing circuitry,
wherein the instructions, when executed by the at least one processor individually or collectively, cause the electronic device to:
based on synchronizing, in accordance with synchronizing to a periodic advertisement of a second external electronic device indicated by information from a first external electronic device, to a broadcast isochronous stream (BIS) from the second external electronic device, provide a first audio service outputting audio via the speaker;
while the first audio service is provided, receive, via a communication link between the electronic device and the first external electronic device, from the first external electronic device, a request that ceases the synchronizing to the BIS and maintains the synchronizing to the periodic advertisement, using the communication circuitry; and
while providing a second audio service based on data received via the communication link from the first external electronic device, cease the synchronizing to the BIS and maintain the synchronizing to the periodic advertisement.

2. The electronic device of claim 1, wherein the instructions, when executed by the at least one processor individually or collectively, cause the electronic device to maintain the synchronizing to the periodic advertisement by receiving at least a portion of packets advertised from the second external electronic device in accordance with the periodic advertisement based on the request while providing the second audio service.

3. The electronic device of claim 1, wherein the instructions, when executed by the at least one processor individually or collectively, cause the electronic device to receive the request from the first external electronic device, through a modify source operation of a broadcast audio scan service (BASS).

4. The electronic device of claim 3, wherein the request indicates:
maintaining the synchronizing to the periodic advertisement using a PA_sync filed of the modify source operation, and
ceasing the synchronizing to the BIS, using a BIS_sync field of the modify source operation.

5. The electronic device of claim 1, wherein the instructions, when executed by the at least one processor individually or collectively, cause the electronic device to:
while providing the second audio service, receive, via the communication link, from the first external electronic device, another request to resume the synchronizing to the BIS, using the communication circuitry; and
in response to the other request, resume to provide the first audio service by resuming the synchronizing to the BIS in accordance with the synchronizing to the periodic advertisement maintained based on the request.

6. The electronic device of claim 5, wherein the instructions, when executed by the at least one processor individually or collectively, cause the electronic device to, through a modify source operation of BASS, receive the other request from the first external electronic device.

7. The electronic device of claim 6, wherein the other request indicates resuming the synchronizing to the BIS, using a BIS_sync filed of the modify source operation.

8. The electronic device of claim 5, wherein the instructions, when executed by the at least one processor individually or collectively, cause the electronic device to cease providing the second audio service, for resuming to provide the first audio service in response to the other request.

9. The electronic device of claim 1, wherein the instructions, when executed by the at least one processor individually or collectively, cause the electronic device to, based on outputting audio via the speaker based on data received via the communication link from the first external electronic device, provide the second audio service.

10. The electronic device of claim 9, further comprising:
a microphone,
wherein the instructions, when executed by the at least one processor individually or collectively, cause the electronic device to, based on transmitting, via the communication link, to the first external electronic device, data regarding audio obtained via the microphone using the communication circuitry, provide the second audio service.

11. A method executed in an electronic device with communication circuitry for Bluetooth low energy (BLE) and a speaker, the method comprising:
based on synchronizing, in accordance with synchronizing to a periodic advertisement of a second external electronic device indicated by information from a first external electronic device, to a broadcast isochronous stream (BIS) from the second external electronic device, providing a first audio service outputting audio via the speaker;
while the first audio service is provided, receiving, via a communication link between the electronic device and the first external electronic device, from the first external electronic device, a request that ceases the synchronizing to the BIS and maintains the synchronizing to the periodic advertisement, using the communication circuitry; and
while providing a second audio service based on data received via the communication link from the first external electronic device, ceasing the synchronizing to the BIS and maintaining the synchronizing to the periodic advertisement.

12. The method of claim 11, wherein maintaining the synchronizing to the periodic advertisement comprises maintaining the synchronizing to the periodic advertisement by receiving at least a portion of packets advertised from the second external electronic device in accordance with the periodic advertisement based on the request while providing the second audio service.

13. The method of claim 11, wherein receiving the request comprises receiving the request from the first external electronic device, through a modify source operation of a broadcast audio scan service (BASS).

14. The method of claim 13, wherein the request indicates:
maintaining the synchronizing to the periodic advertisement using a PA_sync filed of the modify source operation, and
ceasing the synchronizing to the BIS, using a BIS_sync field of the modify source operation.

15. The method of claim 11, further comprising:
while providing the second audio service, receiving, via the communication link, from the first external electronic device, another request to resume the synchronizing to the BIS, using the communication circuitry; and
in response to the other request, resuming to provide the first audio service by resuming the synchronizing to the BIS in accordance with the synchronizing to the periodic advertisement maintained based on the request.
